(19) Europäisches Patentamt

European Patent Office

Office européen des brevets

(11) **EP 1 194 390 B1**

(12) **FASCICULE DE BREVET EUROPEEN**

(45) Date de publication et mention
de la délivrance du brevet:
**03.03.2004 Bulletin 2004/10**

(21) Numéro de dépôt: **00922732.3**

(22) Date de dépôt: **25.04.2000**

(51) Int Cl.⁷: **C04B 24/32**, C04B 24/28,
C04B 24/26, C08F 220/36

(86) Numéro de dépôt international:
**PCT/FR2000/001081**

(87) Numéro de publication internationale:
**WO 2000/066511 (09.11.2000 Gazette 2000/45)**

(54) **NOUVEAUX AGENTS DE TYPE COPOLYMERES ACRYLIQUES A BASE D'URETHANNE POUR AMELIORER LA MANIABILITE DES LIANTS HYDRAULIQUES, LEUR PROCEDE DE PREPARATION, LES LIANTS LES CONTENANT ET LEURS APPLICATIONS**

NEUE, AUF URETHANE BASIERENDE ACRYLCOPOLYMER-MITTEL ZUR VERBESSERUNG DER HANDHABUNG VON HYDRAULISCHEN BINDEMITTELN UND VERFAHREN ZU DEREN HERSTELLUNG

NOVEL ACRYLIC COPOLYMER AGENTS BASED ON URETHANE FOR IMPROVING THE WORKABILITY OF HYDRAULIC BINDERS, PREPARATION METHOD, BINDERS CONTAINING SAME AND USES THEREOF

(84) Etats contractants désignés:
**AT BE CH CY DE DK ES FI FR GB GR IE IT LI LU MC NL PT SE**
Etats d'extension désignés:
**RO SI**

(30) Priorité: **30.04.1999 FR 9905665**

(43) Date de publication de la demande:
**10.04.2002 Bulletin 2002/15**

(73) Titulaire: **COATEX S.A.S.**
**69730 Genay (FR)**

(72) Inventeurs:
• **KENSICHER, Yves**
**F-69380 Lozanne (FR)**
• **SUAU, Jean-Marc**
**F-69480 Lucenay (FR)**

(74) Mandataire: **Richebourg, Michel François**
**Cabinet Michel Richebourg,**
**"Le Clos du Golf",**
**69, rue Saint-Simon**
**42000 Saint Etienne (FR)**

(56) Documents cités:
**EP-A- 0 725 043          EP-A- 0 753 488**
**EP-A- 0 870 784          US-A- 5 725 654**

## Description

La présente invention concerne le secteur technique des mortiers, bétons, et autres compositions à base de ciment et/ou de plâtre, c'est-à-dire de manière générale des composés ou liants hydrauliques, et en particulier les agents capables de modifier leurs caractéristiques rhéologiques, notamment la maniabilité.

La maniabilité peut être définie comme la propriété d'un laitier ou coulis de ciment ou mortier ou, de manière générale, de liant hydraulique, à rester maniable durant un temps aussi long que possible, c'est-à-dire capable d'être déplacé d'un réservoir vers un autre, d'être stocké, d'être pompé avec facilité ou avec une relative facilité, et d'être transporté sur un site d'utilisation, et caractéristiques analogues, et donc de présenter une caractéristique prolongée d'utilisation. On peut évaluer cette propriété par le temps de fluidité du liant hydraulique. L'influence essentielle de ces agents réside dans le fait que la viscosité du laitier ou coulis reste stable durant une période prolongée. La viscosité est stable sur une longue période, mais n'est pas obligatoirement plus faible qu'avec d'autres produits.

Ces agents sont à distinguer des retardateurs de prise, dont la fonction est de retarder la prise en masse du liant hydraulique.

Depuis longtemps l'homme du métier étudie des additifs destinés à être utilisés comme agent fluidifiant des ciments sans un effet significatif quelconque sur le retard de prise.

Il en est ainsi du brevet EP 0 303 747 qui décrit des copolymères de l'acide (méth)acrylique (20 à 40 % molaire) et d'esters (méth)acryliques hydroxyalkylés (80 à 60 % molaire) de poids moléculaire élevé (minimum 70 000 g.mole) ou encore du brevet EP 0 556 061.

Ce document décrit des copolymères de l'anhydride maléique et de monomères tensio-actifs allylés, oxyalkylés et fonctionnalisés par des groupes alkyles courts (1 à 4 carbones).

Il est indiqué que le mélange de tels copolymères est capable de remplacer avec profit les formulations décrites dans le brevet EP 0 490 681.

Ce dit brevet décrit, quant à lui, un additif destiné à améliorer la maniabilité des ciments et des mortiers ainsi qu'à augmenter le temps de maniabilité. Cet additif est constitué d'un mélange à trois composants :

- un sel de lignosulfonate,

- un copolymère de l'anhydride maléique et d'un allyl oxyalkylène d'alkyle (pour des ratios molaires respectifs variant de 1 à 3 et des masses moléculaires revendiquées entre 1 000 et 200 000),

- un tensio-actif anionique.

L'homme du métier connaît encore le brevet WO 94/05606 qui concerne un dispersant spécifique permettant de diminuer la quantité de bulles dans les ciments. Il s'agit d'un polymère hydrosoluble dispersant qui peut être un polyacrylate greffé avec un méthoxy-polyéthylèneglycol (méthoxy-PEG), un copolymère de l'anhydride maléique fonctionnalisé avec un méthoxy- PEG, ou un copolymère de l'anhydride maléique et de l'allyl méthoxy- PEG.

Ce document décrit en outre une fonction d'agent réducteur de viscosité qui peut être un agent alcalin, alcalinoterreux, une amine de bas poids moléculaire, un sel de thiocyanate ou de l'urée.

Il connaît encore le brevet WO 95/09821 qui décrit un additif pour ciment hydraulique destiné à améliorer la rhéologie et défini comme dérivé des polymères acryliques. Il s'agit exclusivement d'acrylates imidisés obtenus par condensation thermique d'amines primaires avec des acides polyacryliques (180°C - 2 heures de réaction) ou par réaction catalysée avec de la dicyclohexylcarbodiimide (70°C - 4 heures de réaction). Les taux de substitution revendiqués varient de 10 à 50 %.

De même le brevet WO 95/16643 décrit un additif fluidifiant destiné aux ciments hydrauliques. Il s'agit de terpolymères de (méth)acrylates d'alkyl-PEG, de l'acide (méth)acrylique et d'un monomère (méth)allyl sulfoné. Les polymères sont obtenus par voie radicalaire et en milieu aqueux.

Il existe aussi le brevet EP 0 725 043 qui est un brevet extrêmement général, revendiquant un grand nombre de molécules obtenues selon des procédés chimiques très différents, et dont l'enseignement pratique ne peut pas être discerné.

Ce document décrit semble-t-il un agent dispersant pour ciment et mortier qui limite le phénomène de retrait lors du séchage, évitant ainsi l'apparition de craquelures. La macromolécule est définie comme un acide polycarboxylique (ainsi que ses sels) greffé ou modifié par des oligoalkylènes glycols et des polyalkylènes glycols.

La définition extrêmement globale des polyacides inclut les copolymères styrène-maléiques, allyléther-maléiques, diisobutylène-maléique, acryliques et méthacryliques.

Les oligomères sont les éthers de bas poids moléculaire très utilisés en peinture comme solvants de coalescence.

Les synthèses des copolymères styrène-anhydride maléique et allyl-maléique sont effectuées dans le solvant puis le polyanhydride obtenu est greffé à l'aide des alcools.

Dans le cas des acryliques, des monomères oxyalkylés sont réalisés avec du chlorure d'acryloyle puis copolymérisés dans l'isopropanol en présence d'acide (méth)acrylique.

Il y a aussi le brevet EP 0 753 488 qui est à nouveau un brevet revendiquant extrêmement largement des structures chimiques. Ces dernières sont décrites comme des agents dispersants extrêmement efficaces pour réduire les problèmes-de maniabilité, même pour des ciments très pauvres en eau.

Les polymères décrits sont tous obtenus par voie radicalaire directe. Il s'agit de terpolymères de l'acide acrylique ou méthacrylique (6 à 60 %), d'un acrylate ou méthacrylate d'alkoxy (C$_1$ à C$_5$ brevet) PEG (polyéthylène glycol) (40 à 94 %) et d'un tiers monomère (0 à 10 %).

Les molécules dont chaque synthèse est détaillée sont comparées à des molécules identiques mais de polydispersité différente.

L'homme du métier peut encore citer le brevet EP 0 271 435 qui concerne la synthèse d'un additif pour composé ou liant hydraulique. Le produit défini comme un polymère greffé s'obtient en faisant polymériser par voie radicalaire un monomère acrylique dans un milieu constitué seulement de tensio-actifs (polyéthylène glycol : PEG, polypropylène glycol : PPG). Le mélange est alors dilué à l'eau puis neutralisé. Il n'y a aucune information sur les rendements de greffages, par contre l'efficacité des produits est testée en maniabilité.

Les produits actuellement connus sur le marché correspondent à la chimie des agents décrits dans lès brevets EP 0 612 702, EP 0 792 850, EP 0 816 298, US 5,362,829, US 5,633,298 ou encore le brevet US 5,668, 195. Dans la même chimie des acides polyacryliques ou polyacrylates greffés comportant des chaînes oligoalkylèneglycol et/ou polyalcool et des polyalkylènes glycols, il est également connu le brevet US 5,660,626 qui décrit des agents dispersants pour réduire le retrait de compositions de ciments, mortiers et bétons, et actifs à faible dosage.

Cependant tous ces agents donnent des caractéristiques de maniabilité qui ne satisfont pas entièrement l'homme du métier.

On mentionnera encore la demande de brevet français FR 27 80 396 non publiée à la date de priorité de la présente demande, et qui décrit l'utilisation, avec les ciments, de polycondensats obtenus par réaction de polyéthylènes glycols et leurs dérivés avec des isocyanates et des alcools de bas poids moléculaire aboutissant à la synthèse de polymères hydrosolubles ou partiellement hydrosolubles, ce qui permet d'augmenter notablement la maniabilité des mortiers, bétons et autres compositions à base de ciment et/ou de plâtre, définies comme composés ou liants hydrauliques. Cette maniabilité se traduit par une augmentation du temps de fluidité du composé hydraulique résultant, permettant une utilisation prolongée dudit composé. Les produits décrits consistent en polycondensats obtenus par réaction de polyéthylènes glycols (PEG) et de leurs dérivés tels que par exemple les copolymères de l'oxyde d'éthylène et de l'oxyde de propylène avec des mono-, di- ou triisocyanates et éventuellement des alcools de bas poids moléculaire.

EP 0 870 784 décrit des copolymères acryliques comprenant une fonction uréthane et une chaîne polyalkylène glycol, utilisables en tant qu' agent dispersant dans les ciments.)

L'état général de la technique montre, en dehors de la demande non publiée ci-dessus, que tous les nouveaux fluidifiants destinés à la maniabilité du ciment sont des polymères hydrosolubles, acryliques ou maléiques et/ou allyliques (contrairement à l'art antérieur où il s'agissait comme montré ci-dessus de lignosulfonates, de résines phénol-formol sulfonées, de tensio-actifs) faiblement anioniques et fortement fonctionnalisés par des esters de groupes alkoxy (alkoxy courts de 1 à 4 carbones) polyéthylène glycols. Dans la suite de la description on utilisera les lettres PEG comme abréviation de polyéthylène glycol.

L'art antérieur le plus proche, outre la demande non publiée ci-dessus, semble être le brevet Sandoz EP 0 725 043 mais ce document ne décrit que des polyacides greffés, des oligoalkylèneglycols et des polyalkylèneglycols, dans un rapport de 50/50 en % en poids.

Par ailleurs, un inconvénient majeur de l'art antérieur, autre que la demande non publiée précitée, réside dans la présence d'une chaîne carboxylique, car une telle chaîne confère une propriété importante de retard de prise. Or, si l'industrie souhaite d'une part augmenter la maniabilité, c'est-à-dire la durée d'utilisation d'un liant, elle ne souhaite d'autre part absolument pas que, au moment choisi pour l'utilisation, la prise soit retardée.

La demande non publiée ci-dessus, au nom du Demandeur, a apporté un progrès significatif en proposant un agent de maniabilité qui ne retarderait pas ou pratiquement pas le temps de prise du liant hydraulique.

Il subsiste cependant encore un besoin important dans l'industrie considérée pour un agent de maniabilité des mortiers, bétons et autres liants hydrauliques qui présenterait des propriétés encore accrues de maniabilité. On a vu en effet dans la revue de l'art antérieur que les propriétés en cause sont extrêmement sensibles et souvent antagonistes, ce qui rend les progrès difficiles.

Il a été découvert selon l'invention que la copolymérisation radicalaire d'au moins un monomère éthylénique à fonction uréthanne alkoxy-polyalkylène glycol et plus particulièrement uréthanne alkoxy-PEG avec au moins un monomère anionique et au moins un monomère non ionique en présence éventuelle de (méth)acrylate d'alkoxy-PEG et de réticulants apportait de manière surprenante une amélioration sensible de la maniabilité alors que l'art antérieur ne mentionnait nullement la présence de monomères à fonction uréthanne alkoxy-polyalkylène glycol et plus particulièrement uréthanne alkoxy-PEG.

Il a donc été découvert que l'utilisation, avec les mortiers, bétons et autres liants hydrauliques, de copolymères acryliques contenant au moins un monomère à fonction uréthanne alkoxy-polyalkylène glycol, aboutissant à la synthèse de polymères hydrosolubles, permet d'augmenter notablement la maniabilité des mortiers, bétons et autres compositions à base de ciment et/ou de plâtre, ces compositions à base de ciment et/ou de plâtre étant plus généralement définies comme composés ou liants hydrauliques. Cette maniabilité se traduit par une augmentation du temps de fluidité du composé hydraulique résultant, permettant une utilisation prolongée dudit composé.

L'invention concerne de nouveaux agents de maniabilité pour les mortiers, bétons et autres liants hydrauliques, caractérisés en ce qu'ils consistent en copolymères obtenus par copolymérisation radicalaire d'au moins un monomère éthylénique uréthanne alkoxy-polyalkylène glycol et plus particulièrement uréthanne alkoxy-PEG avec au moins un monomère anionique et au moins un monomère non ionique en présence éventuelle de (méth)acrylate d'alkoxy-PEG, ledit PEG (polyéthylène glycol) étant défini par un poids moléculaire supérieur à 300, ainsi qu'en présence éventuelle de monomères éthyléniques possédant au moins deux doubles liaisons polymérisables, encore appelés réticulants.

L'invention concerne également les liants hydrauliques comme les mortiers, bétons et autres compositions à base de ciment et/ou de plâtre contenant le nouvel agent de maniabilité selon l'invention.

L'invention concerne de plus l'utilisation des liants hydrauliques contenant le nouvel agent de maniabilité dans la construction, le bâtiment, les travaux publics ou encore les ciments pétroliers et les services parapétroliers.

Le copolymère, nouvel agent de maniabilité pour les mortiers, bétons et autres liants hydrauliques selon l'invention est préparé par les procédés connus de la copolymérisation radicalaire en solution, en émulsion ou en suspension, du mélange des monomères précités, en présence d'un système catalytique et d'agents de transfert connus, mis en oeuvre selon des quantités appropriées, le poids moléculaire dudit copolymère étant ajusté à l'aide des moyens connus tels que par exemple la température, le taux de catalyseur, la présence ou non d'agents de transfert ou encore tout autre moyen ou combinaison de moyens connus de l'homme de l'art.

Le système catalytique de polymérisation, qui peut varier en quantité en poids entre 0,1 % et 10 % par rapport à la masse totale des monomères, est souhaitablement choisi parmi ceux qui sont hydrosolubles tels que, par exemple, les persulfates de sodium, de potassium, d'ammonium ou encore les peroxydes ou les hydroperoxydes tels que, notamment l'eau oxygénée, et éventuellement mis en oeuvre avec un composé réducteur connu tel que notamment le métabisulfite de sodium ou encore les sels métalliques.

L'agent de transfert de chaîne, dont la quantité pondérale peut varier entre 0 % et 5 % en poids par rapport à la masse totale des monomères utilisés est souhaitablement choisi parmi les alkylmercaptans tels que, par exemple, l'octanethiol, le décanéthiol, le n-dodécanethiol, le t-dodécanethiol ou encore parmi l'acide mercapto-propionique, l'acide mercapto-succinique, l'acide thioglycolique ou encore le mercaptoéthanol ou encore les alcools secondaires, certains halogénures d'alkyle ou les sels des acides du phosphore de degré d'oxydation inférieur à 5, ainsi que divers autres additifs connus de l'homme du métier, en tant que limitateur de chaînes.

Dans toute la présente demande, les abréviations utilisées ont la signification suivante :

PO$_4$MAEG = phosphate de méthacrylate d'éthylène glycol

MAEG = méthacrylate d'éthylène glycol

PEG 350 = polyéthylène glycol de poids moléculaire 350

PEG 750 = polyéthylène glycol de poids moléculaire 750

et par analogie, tout nombre suivant les lettres PEG indique le poids moléculaire dudit PEG

AE = acrylate d'éthyle

Acryl = acrylamide

AMA = acide méthacrylique

AA = acide acrylique

TEA = triéthanolamine

TDI =      toluène diisocyanate

IPDI =     isophorone diisocyanate

On polymérise selon la présente invention les monomères suivants :

a) au moins un monomère anionique,

b) au moins un monomère non ionique,

c) au moins un monomère éthylénique uréthanne alkoxy-polyalkylène glycol appelé parfois monomère spécial uréthanne,

d) éventuellement un (méth)acrylate d'alkoxy-PEG,

e) éventuellement un ou des monomères éthyléniques possédant au moins deux doubles liaisons polymérisables et appelés réticulants,

le total des monomères a), b), c), d) et e) étant égal à 100 %.

Le ou les monomères anioniques sont choisis parmi l'acide acrylique, l'acide méthacrylique, l'acide acrylamido-méthyl-propane-sulfonique, le phosphate ou phosphonate ou sulfate ou sulfonate d'acrylate ou méthacrylate d'alkylène glycol, l'acide itaconique, l'anhydride maléique, le méthallylsulfonate de sodium, l'acide styrène sulfonique et plus particulièrement choisis parmi l'acide acrylique, l'acide méthacrylique, l'acide acrylamido-méthyl-propane-sulfonique, le phosphate de méthacrylate d'éthylène glycol ou encore le phosphate d'acrylate d'éthylène glycol.

Le ou les monomères non ioniques sont choisis parmi l'acrylamide ou le méthacrylamide ou leurs dérivés, les alkyl-esters en $C_1$ à $C_5$ des acides acryliques ou méthacryliques, les alkoxy acrylate ou méthacrylate oxyalkylé (le nombre d'oxyde d'alkylène étant compris entre 1 et 5), l'acétate de vinyle, la vinylpyrrolidone, le styrène ou encore l'alphaméthyl-styrène et plus particulièrement parmi l'acrylamide ou l'acrylate d'éthyle.

Le ou les monomères uréthanne alkoxy-polyalkylène glycol sont choisis parmi les produits de réaction de méthoxy-polyalkylène glycol-avec un isocyanate insaturé polymérisable et plus particulièrement parmi les produits de réaction de méthoxy-PEG avec un isocyanate acrylique, méthacrylique, vinylique ou encore allylique.

Les nouveaux agents selon l'invention sont donc des produits que l'on peut qualifier de partiellement PUR (polyuréthanne) tandis que les composés de la demande de brevet français n° 9808484 non publiée étaient des composés dits « 100 % PUR (polyuréthanne) » qui en outre sont non ioniques et obtenus par polycondensation alors que ceux de la présente invention sont obtenus par voie radicalaire et sont partiellement anioniques.

Selon la présente invention, on utilisera au moins 3 % de monomère spécial uréthanne.

Selon l'invention, les monomères seront utilisés dans les proportions suivantes dans le copolymère :

-      pour le monomère a) entre 1 % et 50 % en poids, de préférence entre 5 % et 40 % en poids,

-      pour le monomère b) entre 2 % et 65 % en poids, de préférence entre 5 % et 60 % en poids,

-      pour le monomère c) entre 3 % et 65 % en poids, de préférence entre 10 % et 50 % en poids,

-      pour le monomère d) entre 0 % et 90 % en poids, de préférence entre 0 % et 70 % en poids,

-      pour le monomère e) entre 0 % et 5 % en poids, de préférence entre 0 % et 3 % en poids,

le total des monomères a), b), c), d) et e) étant égal à 100 %.

La présente invention utilise donc le remplacement d'une fonction ester destinée à accrocher le groupe alkoxy-PEG par un pontage uréthanne qui améliore notablement les propriétés de maniabilité, dans les limites ci-dessus des fonctions uréthanne dans les copolymères selon l'invention.

Les copolymères selon l'invention peuvent être ou non réticulés.

S'ils sont réticulés, on pourra utiliser jusqu'à environ 5 % en poids, par rapport à la masse du total des monomères, d'agents réticulants bien connus de l'homme du métier, comme le méthylène-bis-acrylamide ou MBA, le méthylène-bis-méthacrylamide, l'acrylate d'allyle, le tétrallyloxyéthane, les triallylcyanurates ou TAC, les éthers allyliques obtenus à partir de polyols tels que notamment le sorbitol, le sucrose ou autre comme le pentaérythritol triallylé, les triacrylates de pentaérythritol, le diméthacrylate d'éthylène glycol ou EDMA, le triméthylolpropane triacrylate, les di- ou tri-vinylbenzènes, et composés analogues.

Les copolymères selon l'invention pourront être utilisés soit sous forme salifiée soit sous forme partiellement neutralisée, notamment par les ions sodium, mais aussi valablement par les ions potassium, magnésium, calcium, lithium, ammonium ou triéthanolamine et autres amines.

L'invention concerne donc aussi ces agents et leurs utilisations.

Pour la fabrication des monomères uréthanne alkoxy- polyalkylène glycol, produits de réaction d'alkoxy-polyalkylène glycol avec un isocyanate insaturé polymérisable, on utilisera de préférence comme isocyanate insaturé polymérisable, mais de manière non limitative, le diméthyl isopropènyl benzyl isocyanate, le méthacryloyl isocyanate ou encore l'allyl-isocyanate ou encore le produit de réaction d'un diisocyanate tel que, par exemple, le toluène diisocyanate (TDI) ou l'isophorone diisocyanate (IPDI), avec un alcool insaturé polymérisable choisi préférentiellement parmi l'acrylate d'éthylène glycol, le méthacrylate d'éthylène glycol ou l'alcool allylique.

Pour la fabrication des monomères uréthanne alkoxy-polyalkylène glycol, on utilisera de préférence, mais de manière non limitative, un alkoxy-polyéthylène glycol, la chaîne alkyle étant choisie parmi les chaînes possédant de 1 à 5 atomes de carbone bien que le groupe méthyle soit préférable, la longueur de la chaîne oxyéthylée est choisie dans la gamme de poids moléculaire compris entre 350 et 5 000 et plus préférentiellement entre 500 et 1 500.

Les copolymères selon l'invention ont un poids moléculaire correspondant à une viscosité spécifique inférieure à sensiblement 2, de préférence de l'ordre de 0,3 à 1,6, les valeurs supérieures à sensiblement 2 correspondent à des maniabilités médiocres.

La viscosité spécifique du copolymère est symbolisée par la lettre $\eta$ et est déterminée de la manière suivante :

On prend une solution de copolymère de façon à obtenir une solution correspondant à 2,5 g de polymère sec neutralisé à la soude et à 50 ml d'une solution d'eau bipermutée. Puis, on mesure, avec un viscosimètre capillaire de constante de Baumé égale à 0,000105 placé dans un bain thermostaté à 25°C, le temps d'écoulement d'un volume donné de la solution précitée contenant le copolymère, ainsi que le temps d'écoulement du même volume de la solution d'eau bipermutée dépourvue du dit copolymère. Il est alors possible de définir la viscosité spécifique $\eta$ grâce à la relation suivante :

$$\eta = \frac{\text{(temps d'écoulement de la solution de copolymère) - (temps d'écoulement de la solution d'eau bipermutée)}}{\text{temps d'écoulement de la solution d'eau bipermutée}}$$

Le tube capillaire est généralement choisi de telle manière que le temps d'écoulement de la solution d'eau bipermutée dépourvue de copolymère soit d'environ 90 à 100 secondes, donnant ainsi des mesures de viscosité spécifique d'une très bonne précision.

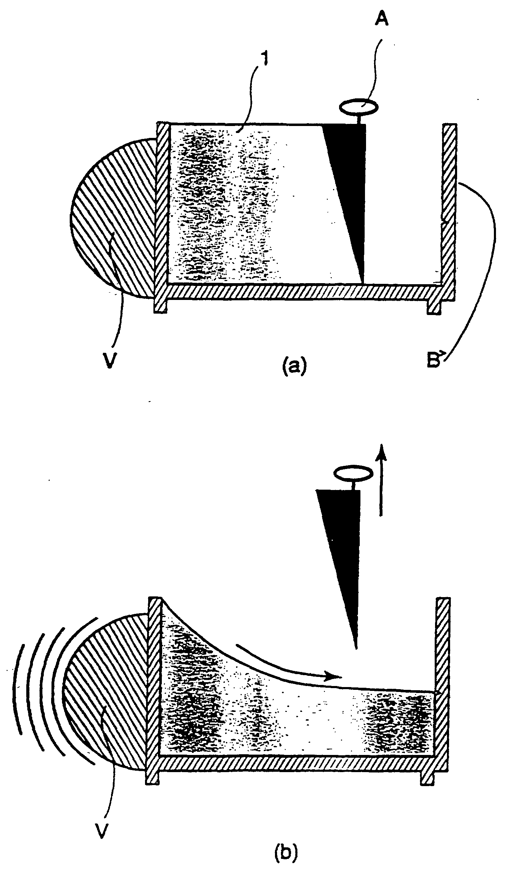

D'autres caractéristiques et avantages de l'invention apparaîtront mieux à la lecture de la description qui va suivre, et en se référant au dessin annexé en figure 1/1. Cette figure 1/1 représente le schéma d'un « maniabilimètre ».

Les exemples suivants illustrent l'invention sans toutefois en limiter la portée.

EXEMPLE 1 :

Cet exemple concerne la synthèse de différents monomères spéciaux uréthanne.

Essai n° 1 :

Dans un réacteur d'un litre muni d'une agitation mécanique, d'un système de chauffage, d'un système de mesure de température, l'ensemble du réacteur étant isolé de l'humidité ambiante, on charge 300 g de méthoxy-PEG 350 contenant moins de 2 000 ppm d'eau.

Dans un autre réacteur similaire du point de vue de l'équipement, on charge les composés suivants :

| | |
|---|---|
| Toluène diisocyanate | 149,1 g |
| Alloocimène | 0,28 g |
| Di laurate de dibutyl étain | 1,61 g |
| Acétate d'éthyle | 258 g |

sur lesquels on coule, progressivement en 45 minutes, 111,8 g de méthacrylate d'éthylène glycol.

On démarre la réaction à 25°C puis la température atteint rapidement 45°C, valeur à laquelle on la stabilise. On effectue alors une cuisson de 45 minutes à cette température puis l'ensemble est coulé, en 20 minutes, sur le méthoxy-PEG préalablement chauffé à 65°C. La coulée terminée, on laisse réagir l'ensemble une heure à 65°C.

On distille ensuite sous vide afin d'éliminer le solvant résiduel.

Le produit obtenu est une pâte jaune pâle dont la teneur en monomère est de 100 %.

Essai n° 2 :

Dans un réacteur d'un litre muni d'une agitation mécanique, d'un système de chauffage, d'un système de mesure de température, l'ensemble du réacteur étant isolé de l'humidité ambiante, on charge 300 g de méthoxy-PEG 500 contenant moins de 2 000 ppm d'eau.

Dans un autre réacteur similaire du point de vue de l'équipement, mais d'un volume de 500 ml, on charge les composés suivants :

| | |
|---|---|
| Toluène diisocyanate | 104,4 g |
| Alloocimène | 0,2 g |
| Di laurate de dibutyl étain | 1,13 g |
| Acétate d'éthyle | 180 g |

sur lesquels on coule, progressivement en 45 minutes, 78 g de méthacrylate d'éthyléne glycol.

On démarre la réaction à 25°C puis la température atteint rapidement 45°C, valeur à laquelle on la stabilise. On effectue alors une cuisson de 45 minutes à cette température puis l'ensemble est coulé, en 20 minutes, sur le méthoxy-PEG préalablement chauffé à 65°C. La coulée terminée, on laisse réagir l'ensemble une heure à 65°C.

On distille ensuite sous vide afin d'éliminer le solvant résiduel.

Le produit obtenu est une pâte jaune pâle dont la teneur en monomère est de 100 %.

Essai n° 3 :

Dans un réacteur d'un litre muni d'une agitation mécanique, d'un système de chauffage, d'un système de mesure de température, l'ensemble du réacteur étant isolé de l'humidité ambiante, on charge 300 g de méthoxy-PEG 750 contenant moins de 2 000 ppm d'eau.

Dans un autre réacteur similaire du point de vue de l'équipement, mais d'un volume de 500 ml, on charge les composés suivants :

| | |
|---|---|
| Toluène diisocyanate | 69,4 g |
| Alloocimène | 0,13 g |
| Di laurate de dibutyl étain | 0,75 g |
| Acétate d'éthyle | 120 g |

sur lesquels on coule, progressivement en 45 minutes, 52,0 g de méthacrylate d'éthylène glycol.

On démarre la réaction à 25°C puis la température atteint rapidement 45°C, valeur à laquelle on la stabilise. On effectue alors une cuisson de 45 minutes à cette température puis l'ensemble est coulé, en 20 minutes, sur le méthoxy-PEG préalablement chauffé à 65°C. La coulée terminée on laisse réagir l'ensemble une heure à 65°C.

On distille ensuite sous vide afin d'éliminer le solvant résiduel.

Le produit obtenu est une pâte jaune pâle dont la teneur en monomère est de 100 %.

Essai n° 4 :

Dans un réacteur d'un litre muni d'une agitation mécanique, d'un système de chauffage, d'un système de mesure de température, l'ensemble du réacteur étant isolé de l'humidité ambiante, on charge 300 g de méthoxy-PEG 1100 contenant moins de 2 000 ppm d'eau.

Dans un autre réacteur similaire du point de vue de l'équipement, mais d'un volume de 250 ml, on charge les composés suivants :

| | |
|---|---|
| Toluène düsocyanate | 47,45 g |
| Alloocimène | 0,09 g |
| Di laurate de dibutyl étain | 0,51 g |
| Acétate d'éthyle | 81,60 g |

sur lesquels on coule, progressivement en 45 minutes, 35,36 g de méthacrylate d'éthylène glycol.

On démarre la réaction à 25°C puis la température atteint rapidement 45°C, valeur à laquelle on la stabilise. On effectue alors une cuisson de 45 minutes à cette température puis l'ensemble est coulé, en 20 minutes, sur le méthoxy-PEG préalablement chauffé à 65°C. La coulée terminée, on laisse réagir l'ensemble une heure à 65°C.

On distille ensuite sous vide afin d'éliminer le solvant résiduel.

Le produit obtenu est une pâte jaune pâle dont la teneur en monomère est de 100 %.

Essai n° 5 :

Dans un réacteur d'un litre muni d'une agitation mécanique, d'un système de chauffage, d'un système de mesure de température, l'ensemble du réacteur étant isolé de l'humidité ambiante, on charge 300 g de méthoxy-PEG 1800 contenant moins de 2 000 ppm d'eau.

Dans un autre réacteur similaire du point de vue de l'équipement, mais d'un volume de 250 ml, on charge les composés suivants :

| | |
|---|---|
| Toluène diisocyanate | 29,00 g |
| Alloocimène | 0,06 g |
| Di laurate de dibutyl étain | 0,32 g |
| Acétate d'éthyle | 50,40 g |

sur lesquels on coule, progressivement en 45 minutes, 21,84 g de méthacrylate d'éthylène glycol.

On démarre la réaction à 25° C puis la température atteint rapidement 45°C, valeur à laquelle on la stabilise. On effectue alors une cuisson de 45 minutes à cette température puis l'ensemble est coulé, en 20 minutes, sur le méthoxy-PEG préalablement chauffé à 65°C. La coulée terminée, on laisse réagir l'ensemble une heure à 65°C.

On distille ensuite sous vide afin d'éliminer le solvant résiduel.

Le produit obtenu est une pâte jaune pâle, solide à température ambiante, dont la teneur en monomère est de 100 %.

Essai n° 6 :

Dans un réacteur d'un litre muni d'une agitation mécanique, d'un système de chauffage, d'un système de mesure de température, l'ensemble du réacteur étant isolé de l'humidité ambiante, on charge 600 g de méthoxy-PEG 5000 contenant moins de 2 000 ppm d'eau.

Dans un autre réacteur similaire du point de vue de l'équipement, mais d'un volume de 250 ml, on charge les composés suivants :

| | |
|---|---|
| Toluène diisocyanate | 20,90 g |
| Alloocimène | 0,04 g |
| Di laurate de dibutyl étain | 0,23 g |
| Acétate d'éthyle | 36,00 g |

sur lesquels on coule, progressivement en 45 minutes, 15,6 g de méthacrylate d'éthylène glycol.

On démarre la réaction à 25°C puis la température atteint rapidement 45°C, valeur à laquelle on la stabilise. On effectue alors une cuisson de 45 minutes à cette température puis l'ensemble est coulé, en 20 minutes, sur le méthoxy-PEG préalablement chauffé à 75°C. La coulée terminée, on laisse réagir l'ensemble une heure à 75°C.

On distille ensuite sous vide afin d'éliminer le solvant résiduel.

Le produit obtenu est une pâte jaune pâle, solide à température ambiante, dont la teneur en monomère est de 100 %.

Essai n° 7 :

Dans un réacteur d'un litre muni d'une agitation mécanique, d'un système de chauffage, d'un système de mesure de température, l'ensemble du réacteur étant isolé de l'humidité ambiante, on charge 300 g de méthoxy-PEG 750 contenant moins de 2 000 ppm d'eau.

Dans un autre réacteur similaire du point de vue de l'équipement, mais d'un volume de 500 ml, on charge les composés suivants :

| Toluène diisocyanate | 69,4 g |
|---|---|
| Alloocimène | 0,13 g |
| Di laurate de dibutyl étain | 0,75 g |
| Acétate d'éthyle | 120 g |

sur lesquels on coule, progressivement en 45 minutes, 23,2 g d'alcool allylique.

On démarre la réaction à 25°C puis la température atteint rapidement 45°C, valeur à laquelle on la stabilise. On effectue alors une cuisson de 45 minutes à cette température puis l'ensemble est coulé, en 20 minutes, sur le méthoxy-PEG préalablement chauffé à 65°C. La coulée terminée, on laisse réagir l'ensemble une heure à 65°C.

On distille ensuite sous vide afin d'éliminer le solvant résiduel.

Le produit obtenu est une pâte jaune pâle dont la teneur en monomère est de 100 %.

Essai n° 8 :

Dans un réacteur d'un litre muni d'une agitation mécanique, d'un système de chauffage, d'un système de mesure de température, l'ensemble du réacteur étant isolé de l'humidité ambiante, on charge 300 g de méthoxy-PEG 750 contenant moins de 2 000 ppm d'eau.

Dans un autre réacteur similaire du point de vue de l'équipement, mais d'un volume de 500 ml, on charge les composés suivants :

| IPDI | 88,66 g |
|---|---|
| Alloocimène | 0,13 g |
| Di laurate de dibutyl étain | 0,75 g |
| Acétate d'éthyle | 120 g |

sur lesquels on coule, progressivement en 45 minutes, 52,0 g de méthacrylate d'éthylène glycol.

On démarre la réaction à 25°C puis la température atteint rapidement 45°C, valeur à laquelle on la stabilise. On effectue alors une cuisson de 45 minutes à cette température puis l'ensemble est coulé, en 20 minutes, sur le méthoxy-PEG préalablement chauffé à 65°C. La coulée terminée, on laisse réagir l'ensemble une heure à 65°C.

On distille ensuite sous vide afin d'éliminer le solvant résiduel.

Le produit obtenu est une pâte jaune pâle dont la teneur en monomère est de 100 %.

Essai n° 9 :

Dans un réacteur d'un litre muni d'une agitation mécanique, d'un système de chauffage, d'un système de mesure de température, l'ensemble du réacteur étant isolé de l'humidité ambiante, on charge 300 g de méthoxy-PEG 750 contenant moins de 2 000 ppm d'eau.

Dans un autre réacteur similaire du point de vue de l'équipement, mais d'un volume de 500 ml, on charge les composés suivants :

| Toluène diisocyanate | 69,4 g |
|---|---|
| AHoocimène | 0,13 g |
| Di laurate de dibutyl étain | 0,75 g |
| Acétate d'éthyle | 120 g |

sur lesquels on coule, progressivement en 45 minutes, 46,4 g d'acrylate d'éthylène glycol.

On démarre la réaction à 25°C puis la température atteint rapidement 45°C, valeur à laquelle on la stabilise. On effectue alors une cuisson de 45 minutes à cette température puis l'ensemble est coulé, en 20 minutes, sur le méthoxy-PEG préalablement chauffé à 65°C. La coulée terminée, on laisse réagir l'ensemble une heure à 65°C.

On distille ensuite sous vide afin d'éliminer le solvant résiduel.

Le produit obtenu est une pâte jaune pâle dont la teneur en monomère est de 100 %.

EXEMPLE 2 :

Cet exemple concerne la fabrication d'un mortier avec différents agents et la détermination de l'efficacité de chacun des polymères de l'exemple 2 testés comme agent de maniabilité.

Pour ce faire, pour tous les essais (essais n° 10 à n° 47) on fabrique le mortier selon le mode opératoire suivant :

On pèse 1890 g de sable CEN EN 196-1 conforme à la norme ISO 679 dans le bol inox d'un mélangeur planétaire et on introduit, en pluie sous agitation à 45 tours par minute (T/min) et en 30 secondes 630 g de ciment CEM 1 52,5 R. L'agitation est alors poursuivie pendant 30 secondes supplémentaires.

Puis le mélange, constitué de 315 g d'eau ordinaire (Rapport Eau/Ciment = 0,5) et de 0,16 % en poids sec d'agent de maniabilité à tester par rapport au ciment sec, est ensuite coulé en 30 secondes sous la même agitation.

Le mortier alors obtenu est ensuite agité pendant 2 minutes à 85 T/min.

Sur le mortier ainsi réalisé, on procède pour chacun des essais, à la mesure de maniabilité.

Pour cette mesure, le test est démarré à la fin des 2 minutes d'agitation en remplissant le vibrateur V (SINEX Type VS 130) avec le mortier (1) précédemment réalisé (Figure 1/1 (a)) et en mesurant la durée d'écoulement, après enlèvement de la cloison A, sous vibration, au temps T (voir Figure 1/1 (b)) jusqu'au repère en encoche placé dans la paroi verticale B (voir Figure 1/1 (b)).

Cette mesure est répétée toutes les 15 minutes ou plus jusqu'à ce que la durée d'écoulement atteigne 30 secondes. La valeur de maniabilité obtenue et dite maniabilité à 30 secondes correspond au temps écoulé depuis la fabrication du mortier jusqu'au moment où la durée d'écoulement du mortier dans le vibrateur atteint 30 secondes. Le produit est d'autant meilleur qu'il s'écoule rapidement et qu'il conserve cette aptitude à l'écoulement le plus longtemps possible, c'est-à-dire qu'il est d'autant meilleur que la valeur de maniabilité est la plus élevée.

Comme on le sait, une action de fluidification est possible avec de la mousse. Pour les essais, on cherchera donc à ne pas produire de mousse afin de ne pas fausser les résultats de maniabilité.

Dans certains cas, un ajout d'antimousse permettra d'éliminer l'effet fluidifiant de la mousse.

Quand aucune mousse ne se forme, aucun antimousse n'a été utilisé.

Essai n° 10 :

Cet essai illustre l'art antérieur et met en oeuvre l'agent de maniabilité commercialisé par la société Mapei sous le nom Mapefluid X404.

Essai n° 11 :

Cet essai illustre l'art antérieur et met en oeuvre l'agent de maniabilité commercialisé par la société MBT sous le nom Glenium 51.

Essai n° 12 :

Cet essai illustre l'art antérieur et met en oeuvre un copolymère, neutralisé à 100 % par de la soude, de composition pondérale en monomère égale à 24,1 % d'acrylamide, 24,1 % d'acide acrylique, 4,9 % d'acide méthacrylique et 46,9 % de méthacrylate de méthoxy-PEG 750.

Essai n° 13 :

Cet essai illustre l'invention et met en oeuvre un copolymère, neutralisé à 100 % par de la soude, de viscosité spécifique égale à 0,37 et de composition pondérale en monomère égale à 43,2 % d'acrylamide, 13,5 % de phosphate de méthacrylate d'éthylène glycol, 9,7 % d'acrylate d'éthyle et 33,6 % de monomère de l'essai n° 3.

Essai n° 14 :

Cet essai illustre l'invention et met en oeuvre un copolymère, neutralisé à 100 % par de la soude, de viscosité spécifique égale à 0,39 et de composition pondérale en monomère égale à 34,6 % d'acrylamide, 13,5 % de phosphate de méthacrylate d'éthylène glycol, 11,6 % d'acrylate d'éthyle et 40,3 % de monomère de l'essai n° 3.

Essai n° 15 :

Cet essai illustre l'invention et met en oeuvre un copolymère, neutralisé à 100 % par de la soude, de viscosité spécifique égale à 0,36 et de composition pondérale en monomère égale à 51,9 % d'acrylamide, 13,5 % de phosphate de méthacrylate d'éthylène glycol, 7,7 % d'acrylate d'éthyle et 26,9 % de monomère de l'essai n° 3.

Essai n° 16 :

Cet essai illustre l'invention et met en oeuvre un copolymère, neutralisé à 100 % par de la soude, de viscosité spécifique égale à 0,52 et de composition pondérale en monomère égale à 34,6 % d'acrylamide, 13,5 % d'acide méthacrylique, 11,6 % d'acrylate d'éthyle et 40,3 % de monomère de l'essai n° 3.

Essai n° 17 :

Cet essai illustre l'invention et met en oeuvre un copolymère, neutralisé à 100 % par de la soude, de viscosité spécifique égale à 0,68 et de composition pondérale en monomère égale à 24,1 % d'acrylamide, 24,0 % d'acide méthacrylique, 11,6 % d'acrylate d'éthyle et 40,3 % de monomère de l'essai n° 3.

Essai n° 18 :

Cet essai illustre l'invention et met en oeuvre un copolymère, neutralisé à 100 % par de la soude, de viscosité spécifique égale à 0,705 et de composition pondérale en monomère égale à 12,0 % d'acrylamide, 36,1 % d'acide méthacrylique, 11,6 % d'acrylate d'éthyle et 40,3 % de monomère de l'essai n° 3.

Essai n° 19 :

Cet essai illustre l'invention et met en oeuvre un copolymère, neutralisé à 100 % par de la soude, de viscosité spécifique égale à 0,55 et de composition pondérale en monomère égale à 24,1 % d'acrylamide, 24,0 % d'acide méthacrylique, 11,6 % d'acrylate d'éthyle et 40,3 % de monomère de l'essai n° 3.

Essai n° 20 :

Cet essai illustre l'invention et met en oeuvre un copolymère, neutralisé à 100 % par de la soude, de viscosité spécifique égale à 0,61 et de composition pondérale en monomère égale à 24,1 % d'acrylamide, 24,0 % d'acide méthacrylique, 11,6 % d'acrylate d'éthyle et 40,3 % de monomère de l'essai n° 3.

Essai n° 21 :

Cet essai illustre l'invention et met en oeuvre un copolymère de même composition monomérique que le précédent et de même poids moléculaire, mais neutralisé à 100 % par de la potasse.

Essai n° 22 :

Cet essai illustre l'invention et met en oeuvre un copolymère de même composition monomérique que le précédent et de même poids moléculaire, mais neutralisé à 100 % par de l'hydroxyde de magnésium.

Essai n° 23 :

Cet essai illustre l'invention et met en oeuvre un copolymère de même composition monomérique que le précédent et de même poids moléculaire, mais neutralisé à 100 % par de l'ammoniaque.

Essai n° 24 :

Cet essai illustre l'invention et met en oeuvre un copolymère de même composition monomérique que le précédent et de même poids moléculaire, mais neutralisé à 100 % par de la chaux.

Essai n° 25 :

Cet essai illustre l'invention et met en oeuvre un copolymère de même composition monomérique que le précédent et de même poids moléculaire, mais neutralisé à 100 % par de l'hydroxyde de lithium.

Essai n° 26 :

Cet essai illustre l'invention et met en oeuvre un copolymère, neutralisé à 100 % par de la soude, de viscosité spécifique égale à 1,93 et de composition pondérale en monomère égale à 18,6 % d'acide méthacrylique, 62,6 % de méthacrylate de méthoxy-PEG 750, 4,2 % d'acrylate d'éthyle et 14,6 % de monomère de l'essai n° 3.

Essai n° 27 :

Cet essai illustre l'invention et met en oeuvre un copolymère, neutralisé à 100 % par de la soude, de viscosité spécifique égale à 0,52 et de composition pondérale en monomère égale à 24,1 % d'acrylamide, 24,0 % d'acide acrylique, 28,5 % de monomère de l'essai n° 4, 6,1 % d'acrylate d'éthyle et 17,3 % de méthoxy 2 moles d'oxyde d'éthylène acrylate encore appelé acrylate de diéthylène glycol méthoxy.

Essai n° 28 :

Cet essai illustre l'invention et met en oeuvre un copolymère, neutralisé à 100 % par de la soude, de viscosité spécifique égale à 0,50 et de composition pondérale en monomère égale à 24,1 % d'acrylamide, 24,0 % d'acide acrylique, 21,4 % de monomère de l'essai n° 4, 4,6 % d'acrylate d'éthyle et 25,9 % de méthoxy- 2 moles d'oxyde d'éthylène acrylate.

Essai n° 29 :

Cet essai illustre l'invention et met en oeuvre un copolymère, neutralisé à 100 % par de la soude, de viscosité spécifique égale à 0,53 et de composition pondérale en monomère égale à 24,1 % d'acrylamide, 24,0 % d'acide acrylique, 36,4 % de monomère de l'essai n° 4, 7,7 % d'acrylate d'éthyle et 7,8 % de méthoxy- 2 moles d'oxyde d'éthylène acrylate.

Essai n° 30 :

Cet essai illustre l'invention et met en oeuvre un copolymère, neutralisé à 100 % par de la soude, de viscosité spécifique égale à 0,73 et de composition pondérale en monomère égale à 48,1 % d'acide méthacrylique, 40,3 % de monomère de l'essai n° 3 et 11,6 % d'acrylate d'éthyle.

Essai n° 31 :

Cet essai illustre l'invention et met en oeuvre un copolymère, neutralisé à 100 % par de la soude, de viscosité spécifique égale à 0,59 et de composition pondérale en monomère égale à 48,1 % d'acide méthacrylique, 40,3 % de monomère de l'essai n° 3 et 11,6 % d'acrylate d'éthyle.

Essai n° 32 :

Cet essai illustre l'invention et met en oeuvre un copolymère, neutralisé à 100 % par de la soude, de viscosité spécifique égale à 0,40 et de composition pondérale en monomère égale à 24,1 % d'acrylamide, 24,0 % d'acide acrylique, 40,3 % de monomère de l'essai n° 3 et 11,6 % d'acrylate d'éthyle.

Essai n° 33 :

Cet essai illustre l'invention et met en oeuvre un copolymère, neutralisé à 100 % par de la soude, de viscosité spécifique égale à 0,54 et de composition pondérale en monomère égale à 24,1 % d'acrylamide, 24,0 % d'acide acrylique, 40,3 % de monomère de l'essai n° 3 et 11,6 % d'acrylate d'éthyle.

Essai n° 34 :

Cet essai illustre l'invention et met en oeuvre un copolymère, neutralisé à 100 % par de la soude, de viscosité spécifique égale à 0,59 et de composition pondérale en monomère égale à 24,1 % d'acrylamide, 24,0 % d'acide acrylique, 40,3 % de monomère de l'essai n° 3 et 11,6 % d'acrylate d'éthyle.

Essai n° 35:

Cet essai illustre l'invention et met en oeuvre un copolymère, neutralisé à 100 % par de la soude, de viscosité spécifique égale à 0,65 et de composition pondérale en monomère égale à 24,1 % d'acrylamide, 24,0 % d'acide acrylique, 51,9 % de monomère de l'essai n° 5.

Essai n° 36 :

Cet essai illustre l'invention et met en oeuvre un copolymère, neutralisé à 100 % par de la soude, de viscosité spécifique égale à 0,57 et de composition pondérale en monomère égale à 24,1 % d'acrylamide, 24,0 % d'acide acrylique, 42,8 % de monomère de l'essai n° 4 et 9,1 % d'acrylate d'éthyle.

Essai n° 37 :

Cet essai illustre l'invention et met en oeuvre un copolymère, neutralisé à 100 % par de la soude, de viscosité spécifique égale à 0,96 et de composition pondérale en monomère égale à 24,1 % d'acrylamide, 24,0 % d'acide acrylique, 49,0 % de monomère de l'essai n° 6 et 2,9 % d'acrylate d'éthyle.

Essai n° 38 :

Cet essai illustre l'invention et met en oeuvre un copolymère, neutralisé à 100 % par de la soude, de viscosité spécifique égale à 0,63 et de composition pondérale en monomère égale à 24,1 % d'acrylamide, 12,1 % d'acrylate d'éthyle, 24,0 % d'acide méthacrylique et 39,8 % de monomère de l'essai n° 8.

Essai n° 39 :

Cet essai illustre l'invention et met en oeuvre un copolymère, neutralisé à 100 % par de la soude, de viscosité spécifique égale à 0,60 et de composition pondérale en monomère égale à 24,1 % d'acrylamide, 12,1 % d'acrylate d'éthyle, 24,0 % d'acide méthacrylique et 39,8 % de monomère de l'essai n° 7.

Essai n° 40 :

Cet essai illustre l'invention et met en oeuvre un copolymère, neutralisé à 100 % par de la soude, de viscosité spécifique égale à 0,605 et de composition pondérale en monomère égale à 24,1 % d'acrylamide, 11,6 % d'acrylate d'éthyle, 24,0 % d'acide méthacrylique et 40,3 % de monomère de l'essai n° 9.

Essai n° 41 :

Cet essai illustre l'invention et met en oeuvre un copolymère, neutralisé à 100 % par de la soude, de viscosité spécifique égale à 0,80 et de composition pondérale en monomère égale à 13,5 % de phosphate de méthacrylate d'éthylène glycol, 26,0 % d'acrylate d'éthyle et 60,5 % de monomère de l'essai n° 2.

Essai n° 42 :

Cet essai illustre l'invention et met en oeuvre un copolymère, neutralisé à 100 % par de la soude, de viscosité spécifique égale à 0,70 et de composition pondérale en monomère égale à 51,9 % d'acrylamide, 13,5 % de phosphate de méthacrylate d'éthylène glycol, 6,7 % d'acrylate d'éthyle, 26,9 % de monomère de l'essai n° 3 et 1 % de réticulant EDMA.

Essai n° 43 :

Cet essai illustre l'invention et met en oeuvre un copolymère, neutralisé à 100 % par de la soude, de viscosité spécifique égale à 1,6 et de composition pondérale en monomère égale à 15,0 % d'acide méthacrylique, 70,0 % de méthacrylate de méthoxy-PEG 750, 3,3 % d'acrylate d'éthyle et 11,7 % de monomère de l'essai n° 3.

Essai n° 44 :

Cet essai illustre l'invention et met en oeuvre un copolymère, neutralisé à 100 % par de la soude, de viscosité spécifique égale à 1,5 et de composition pondérale en monomère égale à 15,0 % d'acide méthacrylique, 75,0 % de méthacrylate de méthoxy-PEG 750, 2,2 % d'acrylate d'éthyle et 7,8 % de monomère de l'essai n° 3.

Essai n° 45 :

Cet essai illustre l'invention et met en oeuvre un copolymère, neutralisé à 100 % par de la soude, de viscosité spécifique égale à 1,74 et de composition pondérale en monomère égale à 40 % d'acide méthacrylique, 40,0 % de méthacrylate de méthoxy- PEG 750, 4,4 % d'acrylate d'éthyle et 15,6 % de monomère de l'essai n° 3.

Essai n° 46 :

Cet essai illustre l'invention et met en oeuvre un copolymère, neutralisé à 100 % par de la soude, de viscosité spécifique égale à 1,14 et de composition pondérale en monomère égale à 12 % d'acide méthacrylique, 80,0 % de méthacrylate de méthoxy- PEG 750, 2,0 % d'acrylate d'éthyle et 6,0 % de monomère de l'essai n° 3.

Essai n° 47 :

Cet essai illustre l'invention et met en oeuvre un copolymère, neutralisé à 100 % par de la soude, de viscosité spécifique égale à 0,41 et de composition pondérale en monomère égale à 13,0 % d'acide méthacrylique, 61,7 % de méthacrylate de méthoxy- PEG 750,5,0 % d'acrylate d'éthyle et 20,3 % de monomère de l'essai n° 1.

Les résultats des valeurs de maniabilité à 30 secondes des différents essais obtenus par la mise du mode opératoire précédemment décrit sont rassemblés dans les tableaux I, I.bis et I.ter suivants :

TABLEAU I

|  | Essai n° | Maniabilité à 30 sec. en min. |
|---|---|---|
| Art antérieur | 10 | 182 |
| Art antérieur | 11 | 200 |
| Art antérieur | 12 | 177 |
| Invention | 13 | 258 |
| Invention | 14 | 238 |
| Invention | 15 | 225 |
| Invention | 16 | 233 |
| Invention | 17 | 241 |
| Invention | 18 | 207 |
| Invention | 19 | 228 |
| Invention | 20 | 240 |
| Invention | 21 | 202 |
| Invention | 22 | 220 |
| Invention | 23 | 200 |
| Invention | 24 | 210 |
| Invention | 25 | 215 |
| Invention | 26 | 208 |
| Invention | 27 | 200 |
| Invention | 28 | 226 |
| Invention | 29 | 250 |
| Invention | 30 | 200 |
| Invention | 31 | 215 |

TABLEAU I   (suite)

|  | Essai n° | Maniabilité à 30 sec. en min. |
|---|---|---|
| Invention | 32 | 215 |
| Invention | 33 | 231 |
| Invention | 34 | 215 |
| Invention | 35 | 210 |
| Invention | 36 | 215 |
| Invention | 37 | 200 |
| Invention | 38 | 269 |
| Invention | 39 | 210 |
| Invention | 40 | 210 |
| Invention | 41 | 200 |
| Invention | 42 | 225 |
| Invention | 43 | 230 |
| Invention | 44 | 225 |
| Invention | 45 | 210 |
| Invention | 46 | 230 |
| Invention | 47 | 220 |

Les résultats obtenus dans les essais n° 13 à n° 47 selon l'invention montrent l'augmentation notable des propriétés de maniabilité, et notamment qu'une caractéristique apportée par l'invention est une mesure de maniabilité supérieure ou égale à 200 minutes.

EXEMPLE 3 :

Cet exemple illustre la variation de la quantité d'agent de maniabilité.

Essai n° 48 :

Cet essai illustre l'invention et met en oeuvre l'agent de maniabilité de l'essai n° 13 à raison de 0,1 % en poids sec de l'agent de maniabilité par rapport au poids sec de ciment.
La valeur de maniabilité, mesurée avec le même mode opératoire que celui décrit dans les essais précédents, est égale à 200 minutes.

Essai n° 49 :

Cet essai illustre l'invention et met en oeuvre l'agent de maniabilité de l'essai n° 13 à raison de 0,25 % en poids sec de l'agent de maniabilité par rapport au poids sec de ciment.
La valeur de maniabilité, mesurée avec le même mode opératoire que celui décrit dans les essais précédents, est égale à 250 minutes.
Ces deux essais permettent de constater que l'agent de maniabilité selon l'invention peut être mis en oeuvre en quantité allant de 0,1 % à 0,3 % en poids sec par rapport au poids sec de ciment.

EXEMPLE 4 :

Cet exemple concerne la fabrication d'un mortier dans le domaine des ciments pétroliers et la détermination de l'efficacité d'un polymère de l'exemple 2 testé comme agent de maniabilité.
Pour ce faire, pour les deux essais (essais n° 50 et 51) on fabrique le mortier selon le mode opératoire suivant :
On pèse 1 890 g de sable CEN EN 196-1 conforme à la norme ISO 679 dans le bol inox d'un mélangeur planétaire et on introduit, en pluie sous agitation à 45 tours par minute (T/min) et en 30 secondes 630 g de ciment CEM 1 52,5 R. L'agitation est alors poursuivie pendant 30 secondes supplémentaires.

Puis le mélange, constitué de 315 g d'eau de mer (Rapport Eau/Ciment = 0,5) et de 0,16 % en poids sec d'agent de maniabilité à tester par rapport au ciment sec, est ensuite coulé en 30 secondes sous la même agitation.

L'eau de mer utilisée a pour composition en poids pour 1 litre d'eau de mer :

| | |
|---|---|
| NaCl | = 44,05 g |
| KCl | = 0,67 g |
| $MgCl_2$, $6H_2O$ | = 4,66 g |
| $MgSO_4$, $7H_2O$ | = 6,29 g |
| $CaCl_2$, $2H_2O$ | = 1,36 g |
| $NaHCO_3$ | = 0,18 g |
| $H_2O$ bipermutée | = q.s.p. 11 |

Le mortier obtenu est ensuite agité pendant 2 minutes à 85 T/min.

Sur le mortier ainsi réalisé, on procède pour chacun des essais, à la mesure de maniabilité.

Pour cette mesure, le test est mis en oeuvre dans les mêmes conditions opératoires et avec le même matériel que ceux de l'exemple 2.

Essai n° 50 :

Cet essai illustre l'art antérieur et met en oeuvre un lignosulfonate commercialisé par la société AVBN. La valeur de la maniabilité à 30 secondes est égale à 85 minutes.

Essai n° 51 :

Cet essai illustre l'invention et met en oeuvre le même copolymère que celui utilisé dans l'essai n° 20. La valeur de la maniabilité à 30 secondes est égale à 210 minutes.

Le résultat obtenu dans l'essai n° 51 selon l'invention montre l'augmentation notable des propriétés de maniabilité dans le domaine des ciments pétroliers.

**Revendications**

**1.** Agents de maniabilité pour les liants hydrauliques, **caractérisés en ce qu'**ils consistent en copolymères obtenus par copolymérisation radicalaire d'au moins un monomère éthylénique uréthanne alkoxy-polyalkylène glycol avec au moins un monomère anionique et au moins un monomère non ionique en présence éventuelle de méthacrylate ou acrylate d'alkoxy-PEG et d'un ou plusieurs monomères éthyléniques possédant au moins deux doubles liaisons polymérisables, appelés réticulants.

**2.** Agents de maniabilité pour les liants hydrauliques, selon la revendication 1, **caractérisés en ce qu'**ils contiennent :

a) entre 1 % et 50 % en poids, d'un ou plusieurs monomères anioniques,

b) entre 2 % et 65 % en poids, d'un ou plusieurs monomères non ioniques,

c) entre 3 % et 65 % en poids, d'un monomère éthylénique uréthanne alkoxy-polyalkylène glycol,

d) entre 0 % et 90 % en poids, d'un acrylate ou méthacrylate d'alkoxy-PEG,

e) entre 0 % et 5 % en poids, d'un réticulant,

le total des monomères a), b), c), d) et e) étant égal à 100 %.

**3.** Agents de maniabilité pour les liants hydrauliques, selon la revendication 2, **caractérisés en ce qu'**ils contiennent :

a) entre 5 % et 40 % en poids, d'un ou plusieurs monomères anioniques,

b) entre 5 % et 60 % en poids, d'un ou plusieurs monomères non ioniques,

c) entre 10 % et 50 % en poids, d'un monomère éthylénique uréthanne alkoxy-polyalkylène glycol,

d) entre 0 % et 70 % en poids, d'un acrylate ou méthacrylate d'alkoxy-PEG,

e) entre 0 % et 3 % en poids, d'un réticulant,

le total des monomères a), b), c), d) et e) étant égal à 100 %.

4. Agents de maniabilité pour les liants hydrauliques, selon l'une quelconque des revendications 1 à 3, **caractérisés en ce que** le ou les monomères anioniques sont choisis parmi l'acide acrylique, l'acide méthacrylique, l'acide acrylamido-méthyl-propane-sulfonique, le phosphate ou phosphonate ou sulfate ou sulfonate d'acrylate ou méthacrylate d'alkylène glycol, l'acide itaconique, l'anhydride maléique, le méthallylsulfonate de sodium, l'acide styrène sulfonique et plus particulièrement choisis parmi l'acide acrylique, l'acide méthacrylique, l'acide acrylamido-méthyl-propane-sulfonique, le phosphate de méthacrylate d'éthylène glycol ou encore le phosphate d'acrylate d'éthylène glycol.

5. Agents de maniabilité pour les liants hydrauliques, selon l'une quelconque des revendications 1 à 3, **caractérisés en ce que** le ou les monomères non ioniques sont choisis parmi l'acrylamide ou le méthacrylamide ou leurs dérivés, les alkyl-esters en $C_1$ à $C_5$ des acides acryliques ou méthacryliques, les alkoxy acrylate ou méthacrylate oxyalkylé (le nombre d'oxyde d'alkylène étant compris entre 1 et 5), l'acétate de vinyle, la vinylpyrrolidone, le styrène ou encore l'alphaméthyl-styrène et plus particulièrement parmi l'acrylamide ou l'acrylate d'éthyle.

6. Agents de maniabilité pour les liants hydrauliques, selon l'une quelconque des revendications 1 à 3, **caractérisés en ce que** le ou les monomères uréthanne alkoxy-polyalkylène glycol sont choisis parmi les produits de réaction d'alkoxy-polyalkylène glycol et plus particulièrement de méthoxy-polyéthylène glycol avec un isocyanate insaturé polymérisable.

7. Agents de maniabilité pour les liants hydrauliques, selon la revendication 6, **caractérisés en ce que** l'isocyanate insaturé polymérisable est choisi parmi un isocyanate acrylique ou un isocyanate méthacrylique ou un isocyanate vinylique ou allylique.

8. Agents de maniabilité pour les liants hydrauliques, selon la revendication 7, **caractérisés en ce que** l'isocyanate insaturé polymérisable est choisi parmi le diméthyl isopropènyl benzyl isocyanate, le méthacryloyl isocyanate ou encore l'allylisocyanate.

9. Agents de maniabilité pour les liants hydrauliques, selon la revendication 7, **caractérisés en ce que** l'isocyanate insaturé polymérisable est le produit de la réaction d'un alcool insaturé polymérisable avec un diisocyanate.

10. Agents de maniabilité pour les liants hydrauliques, selon la revendication 9, **caractérisés en ce que** le diisocyanate est choisi parmi le toluène diisocyanate ou l'isophorone diisocyanate.

11. Agents de maniabilité pour les liants hydrauliques, selon la revendication 9, **caractérisés en ce que** l'alcool insaturé polymérisable est choisi parmi l'acrylate d'éthylène glycol, le méthacrylate d'éthylène glycol ou encore l'alcool allylique.

12. Agents de maniabilité pour les liants hydrauliques, selon l'une quelconque des revendications 6 à 11, **caractérisés en ce que** le ou les monomères uréthanne alkoxy-polyalkylène glycol sont choisis parmi le ou les monomères uréthanne alkoxy-polyéthylène glycol et plus particulièrement parmi le ou les monomères uréthanne méthoxy-polyéthylène glycol.

13. Agents de maniabilité pour les liants hydrauliques, selon la revendication 12, **caractérisés en ce que** le méthoxy-polyéthylène glycol a un poids moléculaire compris entre 350 et 5 000.

14. Agents de maniabilité pour les liants hydrauliques, selon la revendication 13, **caractérisés en ce que** le méthoxy-polyéthylène glycol a un poids moléculaire compris entre 500 et 1 500.

**15.** Agents de maniabilité pour les liants hydrauliques, selon l'une quelconque des revendications 1 à 14, **caractérisés en ce que** le ou les monomères éthyléniques possédant au moins deux doubles liaisons polymérisables sont choisis parmi le méthylène-bis-acrylamide ou MBA, le méthylène-bis-méthacrylamide, l'acrylate d'allyle, le tétrallyloxyéthane, les triallylcyanurates ou TAC, les éthers allyliques obtenus à partir de polyols tels que le sorbitol, le sucrose ou encore parmi le pentaérythritol triallylé, les triacrylates de pentaérythritol, le diméthacrylate d'éthylène glycol ou EDMA, le triméthylolpropane triacrylate, les di- ou tri-vinylbenzènes.

**16.** Agents de maniabilité pour les liants hydrauliques, selon l'une quelconque des revendications 1 à 15, **caractérisés en ce qu'**ils possèdent une viscosité spécifique inférieure à 2 et préférentiellement comprise entre 0,3 et 1,6.

**17.** Utilisation de copolymères selon l'une quelconque des revendications 1 à 16 comme agent de maniabilité pour les liants hydrauliques.

**18.** Liants hydrauliques comme les bétons, mortiers, mélanges à base de ciment et/ou de plâtre, **caractérisés en ce qu'**ils contiennent un agent de maniabilité selon l'une quelconque des revendications 1 à 16.

**19.** Liants hydrauliques comme les bétons, mortiers, mélanges à base de ciment et/ou de plâtre, **caractérisés en ce qu'**ils contiennent entre 0,1 % et 0,3 % en poids sec par rapport au poids sec de ciment et/ou de plâtre, d'un agent de maniabilité selon l'une quelconque des revendications 1 à 16.

**20.** Application des liants hydrauliques selon la revendication 18 ou 19 dans la construction, le bâtiment, les travaux publics ou encore les ciments pétroliers et les services parapétroliers.

**Claims**

**1.** Workability agents for hydraulic binders, **characterised in that** they consist of copolymers obtained by free-radical copolymerisation of at least one ethylenic alkoxy-polyalkylene glycol urethane monomer with at least one anionic monomer and at least one nonionic monomer, optionally in the presence of alkoxy-PEG methacrylate or acrylate and one or more ethylenic monomers having at least two polymerisable double bonds designated crosslinking agents.

**2.** Workability agents for hydraulic binders according to claim 1, **characterised in that** they contain

   a) between 1% and 50% by weight of one or more anionic monomers,
   b) between 2% and 65% by weight of one or more nonionic monomers,
   c) between 3% and 65% by weight of an ethylenic alkoxy-polyalkylene glycol urethane monomer,
   d) between 0% and 90% by weight of an alkoxy-PEG acrylate or methacrylate,
   e) between 0% and 5% by weight of a crosslinking agent,

   the total of monomers a), b), c), d) and e) equalling 100%.

**3.** Workability agents for hydraulic binders according to claim 2, **characterised in that** they contain

   a) between 5% and 40% by weight of one or more anionic monomers,
   b) between 5% and 60% by weight of one or more nonionic monomers,
   c) between 10% and 50% by weight of an ethylenic alkoxy-polyalkylene glycol urethane monomer,
   d) between 0% and 70% by weight of an alkoxy-PEG acrylate or methacrylate,
   e) between 0% and 3% by weight of a crosslinking agent,

   the total of monomers a), b), c), d) and e) equalling 100%.

**4.** Workability agents for hydraulic binders according to any one of claims 1 to 3, **characterised in that** the anionic monomer(s) is/are selected from among acrylic acid, methacrylic acid, acrylamidomethylpropanesulfonic acid, alkylene glycol acrylate or methacrylate phosphate or phosphonate or sulfate or sulfonate, itaconic acid, maleic anhydride, sodium methallylsulfonate, styrenesulfonic acid and more particularly selected from among acrylic acid, methacrylic acid, acrylamidomethylpropanesulfonic acid, ethylene glycol methacrylate phosphate or alternatively ethylene glycol acrylate phosphate.

5. Workability agents for hydraulic binders according to any one of claims 1 to 3, **characterised in that** the nonionic monomer(s) is/are selected from among acrylamide or methacrylamide or the derivatives thereof, $C_1$ to $C_5$ alkyl esters of acrylic or methacrylic acids, alkoxylated alkoxy-acrylates or - methacrylates (the number of alkylene oxides being between 1 and 5), vinyl acetate, vinylpyrrolidone, styrene or also α-methylstyrene and more particularly from among acrylamide or ethyl acrylate.

6. Workability agents for hydraulic binders according to any one of claims 1 to 3, **characterised in that** the alkoxy-polyalkylene glycol urethane monomers are selected from among the reaction products of alkoxy-polyalkylene glycol and more particularly of methoxy-polyethylene glycol with a polymerisable unsaturated isocyanate.

7. Workability agents for hydraulic binders according to claim 6, **characterised in that** the polymerisable unsaturated isocyanate is selected from among an acrylic isocyanate, a methacrylic isocyanate or a vinyl or allyl isocyanate.

8. Workability agents for hydraulic binders according to claim 7, **characterised in that** the polymerisable unsaturated isocyanate is selected from among dimethyl isopropenyl benzyl isocyanate, methacryloyl isocyanate or alternatively allyl isocyanate.

9. Workability agents for hydraulic binders according to claim 7, **characterised in that** the polymerisable unsaturated isocyanate is the reaction product of a polymerisable unsaturated alcohol with a diisocyanate.

10. Workability agents for hydraulic binders according to claim 9, **characterised in that** the diisocyanate is selected from among toluene diisocyanate or isophorone diisocyanate.

11. Workability agents for hydraulic binders according to claim 9, **characterised in that** the polymerisable unsaturated alcohol is selected from among ethylene glycol acrylate, ethylene glycol methacrylate or alternatively allyl alcohol.

12. Workability agents for hydraulic binders according to any one of claims 6 to 11, **characterised in that** the alkoxy-polyalkylene glycol urethane monomers are selected from among alkoxy-polyethylene glycol urethane monomers and more particularly from among methoxy-polyethylene glycol urethane monomer(s).

13. Workability agents for hydraulic binders according to claim 12, **characterised in that** the methoxy-polyethylene glycol has a molecular weight of between 350 and 5000.

14. Workability agents for hydraulic binders for hydraulic binders according to claim 13, **characterised in that** the methoxy-polyethylene glycol has a molecular weight of between 500 and 1500.

15. Workability agents for hydraulic binders according to any one of claims 1 to 14, **characterised in that** the ethylenic monomer(s) having at least two polymerisable double bonds are selected from among methylene bisacrylamide or MBA, methylene bismethacrylamide, allyl acrylate, tetraallyl oxyethane, triallyl cyanurates or TAC, allyl ethers obtained from polyols such as sorbitol, sucrose or alternatively from among triallyl pentaerythritol, pentaerythritol triacrylates, ethylene glycol dimethacrylate or EDMA, trimethylolpropane triacrylate, di- or trivinyl-benzenes.

16. Workability agents for hydraulic binders according to any one of claims 1 to 15, **characterised in that** they have a specific viscosity of below 2 and preferably of between 0.3 and 1.6.

17. Use of copolymers according to any one of claims 1 to 16 as a workability agents for hydraulic binders.

18. Hydraulic binders such as concretes, mortars, cement- and/or plaster-based mixes, **characterised in that** they contain a workability agent according to any one of claims 1 to 16.

19. Hydraulic binders such as concretes, mortars, cement- and/or plaster-based mixes, **characterised in that** they contain between 0.1% and 0.3% by dry weight, relative to the weight of cement and/or plaster, of a workability agent according to any one of claims 1 to 16.

20. Use of the hydraulic binders according to claim 18 or 19 in construction, building, civil engineering or alternatively in oil well cements or petroleum-related services.

**Patentansprüche**

1. Mittel zur leichteren Handhabung von hydraulischen Bindemitteln, **dadurch gekennzeichnet, dass** sie aus Copolymeren bestehen, die durch Radikal-Copolymerisation mindestens eines Ethylenurethanalkoxypolyalkylenglycols mit mindestens einem anionischen Monomer und mindestens einem nicht ionischen Monomer im möglichen Beisein von Alkoxy-PEG-Methacrylat oder —Acrylat und einem oder mehreren Ethylenmonomeren gewonnen werden, das/die mindestens zwei polymerisierbare Doppelbindungen umfasst/umfassen, und die Vernetzungsmittel genannt werden.

2. Mittel zur leichteren Handhabung von hydraulischen Bindemitteln nach Anspruch 1, **dadurch gekennzeichnet, dass** sie enthalten:

   a) 1 bis 50 Gew.-% eines anionischen Monomers oder mehrerer anionischer Monomere,
   b) 2 bis 65 Gew.-% eines nicht ionischen Monomers oder mehrerer nicht ionischer Monomere,
   c) 3 bis 65 Gew.-% eines Ethylenurethanalkoxypolyalkylenglycolmonomers,
   d) 0 bis 90 Gew.-% eines Alkoxy-PEG-Acrylats oder -Methacrylats,
   e) 0 bis 5 Gew.-% eines Vernetzungsmittels,

   wobei die Summe der Monomere a), b), c), d) und e) gleich 100% ist.

3. Mittel zur leichteren Handhabung von hydraulischen Bindemitteln nach Anspruch 2, **dadurch gekennzeichnet, dass** sie enthalten:

   a) 5 bis 40 Gew.-% eines anionischen Monomers oder mehrerer anionischer /Monomere,
   b) 5 bis 60 Gew.-% eines nicht ionischen Monomers oder mehrerer nicht ionischer Monomere,
   c) 10 bis 50 Gew.-% eines Ethylenurethanalkoxypolyalkylenglycolmonomers,
   d) 0 bis 70 Gew.-% eines Alkoxy-PEG-Acrylats oder -Methacrylats,
   e) 0 bis 3 Gew.-% eines Vernetzungsmittels,

   wobei die Summe der Monomere a), b), c), d) und e) gleich 100% ist.

4. Mittel zur leichteren Handhabung von hydraulischen Bindemitteln nach einem der Ansprüche 1 bis 3, **dadurch gekennzeichnet, dass** das oder die anionische/n Monomer/e aus Acrylsäure, Methacrylsäure, Acrylamidmethylpropansulfonsäure, Phosphat oder Phosphonat oder Sulfat oder Sulfonat von Alkylenglycolacrylat- oder -methacrylat, Itaconsäure, Maleinsäureanhydrid, Natriummethallylsulfonat, Styrolsulfonsäure ausgewählt ist/sind, und insbesonder aus Acrylsäure, Methacrylsäure, Acrylamidmethylpropansulfonsäure, dem Phosphat von Ethylenglycolmethacrylat oder auch dem Phosphat von Ethylenglycolacrylat ausgewählt ist/sind.

5. Mittel zur leichteren Handhabung von hydraulischen Bindemitteln nach einem der Ansprüche 1 bis 3, **dadurch gekennzeichnet, dass** das oder die nicht ionische/n Monomer/e aus Acrylamid oder Methacrylamid oder deren Derivaten, $C_1$ - $C_5$-Alkylestem von Acryl- oder Methacrylsäuren, Alkoxyacrylat oder oxyalkiertem Methacrylat (wobei die Alkylenoxidzahl 1 bis 5 beträgt), Vinylacetat, Vinylpyrrolidon, Styrol oder auch Alphamethylstyrol und insbesondere aus Ethylacrylamid oder -acrylat ausgewählt ist/sind.

6. Mittel zur leichteren Handhabung von hydraulischen Bindemitteln nach einem der Ansprüche 1 bis 3, **dadurch gekennzeichnet, dass** das oder die Urethanalkoxypolyalkylenglycolmonomer/e aus den Reaktionsprodukten von Alkoxypolyalkylenglycol und insbesondere von Methoxypolyethylenglycol mit einem polymerisierbaren ungesättigten Isocyanat ausgewählt ist/sind.

7. Mittel zur leichteren Handhabung von hydraulischen Bindemitteln nach Anspruch 6, **dadurch gekennzeichnet, dass** das polymerisierbare ungesättigte Isocyanat aus einem Acrylisocyanat oder einem Methacrylisocyanat oder einem Vinyl- oder Allylisocyanat ausgewählt ist.

8. Mittel zur leichteren Handhabung von hydraulischen Bindemitteln nach Anspruch 7, **dadurch gekennzeichnet, dass** das polymerisierbare ungesättigte Isocyanat aus Dimethylisopropenylbenzylisocyanat, Methacryloylisocyanat oder auch Allylisocyanat ausgewählt ist.

9. Mittel zur leichteren Handhabung von hydraulischen Bindemitteln nach Anspruch 7, **dadurch gekennzeichnet,**

**dass** das polymerisierbare ungesättigte Isocyanat das Produkt der Reaktion eines polymerisierbaren ungesättigten Alkohols mit einem Diisocyanat ist.

10. Mittel zur leichteren Handhabung von hydraulischen Bindemitteln nach Anspruch 9, **dadurch gekennzeichnet, dass** das Diisocyanat aus Toluoldiisocyanat oder Isophorondiisocyanat ausgewählt ist.

11. Mittel zur leichteren Handhabung von hydraulischen Bindemitteln nach Anspruch 9, **dadurch gekennzeichnet, dass** der polymerisierbare ungesättigte Alkohol aus Ethylenglycolacrylat, Ethylenglycolmethacrylat oder auch Allylalkohol ausgewählt ist.

12. Mittel zur leichteren Handhabung von hydraulischen Bindemitteln nach einem der Ansprüche 6 bis 11, **dadurch gekennzeichnet, dass** das oder die Urethanalkoxypolyalkylenglycolmonomer/e aus dem oder den Urethanalkoxypolyethylenglycolmonomer/en und insbesondere aus dem oder den Urethanmethoxypolyethylenglycolmonomer/en ausgewählt ist/sind.

13. Mittel zur leichteren Handhabung von hydraulischen Bindemitteln nach Anspruch 12, **dadurch gekennzeichnet, dass** das Methoxypolyethylenglycol ein Molekulargewicht von 350 bis 5000 hat.

14. Mittel zur leichteren Handhabung von hydraulischen Bindemitteln nach Anspruch 13, **dadurch gekennzeichnet, dass** das Methoxypolyethylenglycol ein Molekulargewicht von 500 bis 1500 hat.

15. Mittel zur leichteren Handhabung von hydraulischen Bindemitteln nach einem der Ansprüche 1 bis 14, **dadurch gekennzeichnet, dass** das oder die Ethylenmonomer/e, das/die mindestens zwei polymerisierbare Doppelbindungen umfasst/umfassen, aus Methylenbisacrylamid oder MBA, Methylenbismethacrylamid, Allylacrylat, Tetraallyloxyethan, Triallylcyanuraten oder TAC, Allylethem, die aus Polyolen wie Sorbitol, Sucrose gewonnen werden, oder auch aus Triallylpentaerythritol, Pentaerythritoltriacrylaten, Ethylenglycoldimethacrylat oder EDMA, Trimethylolpropantriacrylat, Di- oder Trivinylbenzolen ausgewählt ist/sind.

16. Mittel zur leichteren Handhabung von hydraulischen Bindemitteln nach einem der Ansprüche 1 bis 15, **dadurch gekennzeichnet, dass** sie eine spezifische Viskosität unter 2 und insbesondere von 0,3 bis 1,6 besitzen.

17. Verwendung von Copolymeren nach einem der Ansprüche 1 bis 16 als Mittel zur leichteren Handhabung von hydraulischen Bindemitteln.

18. Hydraulische Bindemittel wie Beton, Mörtel, Gemischen auf der Basis von Zement und/oder Gips, **dadurch gekennzeichnet, dass** sie ein Mittel zu leichteren Handhabung nach einem der Ansprüche 1 bis 16 enthalten.

19. Hydraulische Bindemittel wie Beton, Mörtel, Gemischen auf der Basis von Zement und/oder Gips, **dadurch gekennzeichnet, dass** sie 0,1 bis 0,3 Trockengewichtsprozent im Vergleich zum Trockengewicht des Zements und/oder Gipses von einem Mittel zur leichteren Handhabung nach einem der Ansprüche 1 bis 16 enthalten.

20. Anwendung von hydraulischen Bindemitteln nach Anspruch 18 oder 19 im Bauwesen, Hochbau, Tiefbau oder auch in Ölquellenzementen und im Erdölschutzeinsatz.

(a)

(b)